# EUROPÄISCHE PATENTSCHRIFT

(11) **EP 4 382 872 B1**
(45) Veröffentlichungstag und Bekanntmachung des Hinweises auf die Patenterteilung: **22.07.2026**
(21) Anmeldenummer: 23212572.4
(22) Anmeldetag: 28.11.2023
(51) Int. Cl.: G01F 23/284, G01S 13/88, H01Q 1/22, G01S 7/02, G01S 7/03, H01P 1/04, H01Q 19/08

(54) **SENSORANORDNUNG MIT WÄRMEISOLATION**
SENSOR ARRANGEMENT WITH THERMAL INSULATION
ENSEMBLE CAPTEUR AVEC ISOLATION THERMIQUE

(30) Priorität: 06.12.2022 DE 102022213160
(43) Veröffentlichungstag der Anmeldung: 12.06.2024
(73) Patentinhaber: VEGA Grieshaber KG, 77709 Wolfach (DE)
(72) Erfinder: ILG, Thomas, 77716 Haslach (DE); BADER, Tobias, 77716 Haslach (DE)
(74) Vertreter: Maiwald GmbH

(56) Entgegenhaltungen:
- EP-B1- 0 376 401
- CN-A- 111 463 538
- DE-A1- 102005 036 844
- DE-A9- 102005 036 715
- US-A1- 2022 074 783

## Beschreibung

Die vorliegende Anmeldung beansprucht die Priorität der deutschen Patentanmeldungen Nr. 10 2022 213 160.6, eingereicht am 6. Dezember 2022.

### Gebiet der Erfindung

Die Erfindung betrifft eine Sensoranordnung gemäß Anspruch 1 und die Verwendung einer Sensoranordnung gemäß Anspruch 10.

### Technischer Hintergrund

In der modernen Prozessanlage werden viele Feldgeräte bzw. Messgeräte stationär und verteilt installiert, um Mess-, Parametrier- und Diagnosedaten zu erfassen. Die Feldgeräte werden häufig im Outdoor bzw. in anspruchsvollen Umgebungen beispielsweise mit einer hohen Arbeitstemperatur eingesetzt. Solche Feldgeräte weisen beispielsweise einen Wellenleiter auf, mit welchem ein Messstrahl von einer Messelektronik an eine Antenne oder umgekehrt übertragen werden kann. Für den Einsatz der Feldgeräte über einen langen Zeitraum sind die Zuverlässigkeit und die Stabilität der Feldgeräte von großer Bedeutung.

DE 10 2005 036844 A1 beschreibt ein Füllstandradar mit Potentialtrennung zur Bestimmung eines Füllstands in einem Tank, die eine Antenne zum Aussenden oder Empfangen von elektromagnetischen Wellen, eine Speisevorrichtung zur Speisung der Antenne mit den elektromagnetischen Wellen und ein Trennelement zur Isolation der Speisevorrichtung von der Antenne aufweist. Das Trennelement weist eine Aussparung in Längsrichtung der Speisevorrichtung und einen Überlappungsbereich zum Überlapp in Längsrichtung mit zumindest der Speisevorrichtung oder der Antenne auf.

### Zusammenfassung der Erfindung

Es ist eine Aufgabe der Erfindung, einen flexiblen und robusten Messsensor in einer Prozessanlage anzugeben.

Diese Aufgabe wird durch die Merkmale des unabhängigen Patentanspruchs gelöst. Weiterbildungen der Erfindung ergeben sich aus den Unteransprüche und der folgenden Beschreibung.

Ein Aspekt der Erfindung betrifft eine Sensoranordnung, die zur Messung eines Füllstands und/oder eines Grenzstands eingerichtet ist und eine Antenne, die zum Aussenden und/oder Empfangen eines Messsignals eingerichtet ist, einen Hohlleiter und ein Wärmeisolierelement aufweist. Der Hohlleiter weist einen ersten Hohlleiterabschnitt zum Verbinden mit der Antenne und einen zweiten Hohlleiterabschnitt auf und ist zum Übertragen des Messsignals eingerichtet. Der zweite Hohlleiterabschnitt kann beispielsweise zum Verbinden mit einer Hochfrequenzelektronikeinheit eingerichtet sein.

Das Wärmeisolierelement kann als ein Verbindungselement für die Hohlleiterabschnitte zur Wärmedämmung oder zur Reduktion eines Durchgangs von Wärmeenergie von einem Hohlleiterabschnitt in den anderen Hohlleiterabschnitt dienen. Daher kann das Wärmeisolierelement einen größeren thermischen Widerstand oder einen größeren spezifischen Wärmewiderstand als der Hohlleiter bzw. der erste Hohlleiterabschnitt und der zweite Hohlleiterabschnitt aufweisen.

Das Wärmeisolierelement ist zwischen dem ersten Hohlleiterabschnitt und dem zweiten Hohlleiterabschnitt angeordnet und dazu eingerichtet, eine Wärmeleitung zwischen dem ersten Hohlleiterabschnitt und dem zweiten Hohlleiterabschnitt zumindest teilweise zu verhindern. Das Wärmeisolierelement ist rohrförmig ausgebildet und besteht aus einem wärmeisolierenden Material. Das Wärmeisolierelement weist eine Innenwandung auf, die zumindest teilweise metallisiert ist. Die Innenwandung des Wärmeisolierelements entspricht bei dem Verbinden des ersten Hohlleiterabschnitts mit dem ersten Isolierelementabschnitt und/oder dem Verbinden des zweiten Hohlleiterabschnitts mit dem zweiten Isolierelementabschnitt der Innenwandung des Hohlleiters.

Die Sensoranordnung kann eine Radarsensoranordnung sein. Die Sensoranordnung kann beispielsweise einen Radarsensor aufweisen, der Füllstand- und/oder Grenzstandsensor sein kann.

Der Füllstand- und/oder Grenzstandsensor kann weiterhin eine externe, kabelgebundene Energieversorgung aufweisen, die mit der Elektronik elektrisch verbunden sein kann, um erforderliche Energie zum Betreiben der Sensoranordnung bereitzustellen. Alternative kann die Sensoranordnung einen autarken Radarsensor aufweisen, der eine interne Energieversorgung, wie z. B. eine Batterie, einen Akku, ein Energie-Harvesting-System oder eine Solarzelle aufweisen kann.

Gemäß einer Ausführungsform ist die Antenne der Sensoranordnung eine Hornantenne oder eine Parabolantenne.

Beispielsweise kann die Antenne als eine Radarantenne eine metallische Antenne oder eine Kunststoffantenne sein, deren Innenseite metallisiert sein kann. Darüber hinaus kann die Antenne mit dem Hohlleiter oder dem Wellenleiter verbunden sein. Beispielsweise kann die Antenne mit dem ersten Hohlleiterabschnitt integral oder integriert ausgebildet sein.

Bei dem ersten Hohlleiterabschnitt, der ein Hohlleiterunterteil sein kann, kann es sich beispielsweise um einen rohrförmigen Hohlleiterabschnitt handeln. Und bei dem zweiten Hohlleiterabschnitt, der ein Hohlleiteroberteil sein kann, kann es sich beispielsweise ebenfalls um einen rohrförmigen Abschnitt handeln. Der erste oder zweite rohrförmige Hohlleiterabschnitt kann einen kreisförmigen oder rechteckigen Querschnitt, beispielsweise zum Übertragen des Messsignals mit einer Frequenz von 240 GHz, aufweisen. Es kann somit sein, dass der Hohlleiter für den Radarsensor unterbrochen ausgebildet sein kann, so dass das Wärmeisolierelement oder der Wärmeisolator inzwischen angeordnet sein kann.

Der erste Hohlleiterabschnitt kann einen gleichen Innendurchmesser und gegebenenfalls einen gleichen Außenumfang haben wie der zweite Hohlleiterabschnitt. Alternativ kann der erste Hohlleiterabschnitt einen unterschiedlich großen Außenumfang als der zweite Hohlleiterabschnitt aufweisen, wobei die Innendurchmesser der ersten und zweiten Hohlleiterabschnitte gleichgroß gehalten sein können.

Beispielsweise kann der Hohlleiter aus einem Metall bestehen, der beispielsweise Kupfer oder ein Edelstahl sein kann. Insbesondere kann der erste Hohlleiterabschnitt aus einem gleichen Metall wie der zweite Hohlleiterabschnitt und/oder die Antenne bestehen.

Mit dem gleichen Innendurchmesser und dem gleichen Material bzw. Metall der Antenne und des Hohlleiters mit den ersten und zweiten Hohlleiterabschnitten kann die Sensoranordnung derart ausgestaltet sein, dass das Messsignal oder das Radarsignal an den Übergangsstellen störungsfrei und ohne Unterbrechung übertragen werden kann.

Gemäß einer Ausführungsform kann das Wärmeisolierelement rohrförmig ausgebildet sein.

Beispielsweise kann das rohrförmige Wärmeisolierelement ein kreisförmiges Profil oder ein rechteckiges Profil für ein Messsignal mit einer Frequenz von 240 GHz aufweisen.

Gemäß einer weiteren Ausführungsform weist das Wärmeisolierelement eine Innenwandung auf, die zumindest teilweise metallisiert ist.

Die Innenwandung des Wärmeisolierelements kann als eine Bohrung oder eine Durchführung ausgebildet und zum Übertragen des Messsignals zwischen den ersten und zweiten Hohlleiterabschnitten eingerichtet sein. Die Metallisierung der Innenwandung kann somit zum optimalen Übertragung des Messsignals dienen, insbesondere wenn die Innenwandung mit dem gleichen Metall wie dem der ersten und zweiten Hohlleiterabschnitte und/oder der Antenne metallisiert sein kann. Dabei können die Innenwandungsübergänge zwischen dem ersten Hohlleiterabschnitt und dem Wärmeisolierelement und zwischen dem Wärmeisolierelement und dem zweiten Hohlleiterabschnitt ohne Stufenbildung, durchgängig und spaltfrei ausgestaltet sein.

Gemäß einer weiteren Ausführungsform besteht das Wärmeisolierelement aus einem wärmeisolierenden Material.

Mittels des wärmeisolierenden Materials kann das Wärmeisolierelement derart eingerichtet sein, um zu verhindern, dass die Wärme an ein weiteres Bauelement der Sensoranordnung, beispielsweise eine Elektronik der Sensoranordnung hochgezogen werden oder gelangen kann, insbesondere wenn ein Radarchip an der Elektronik der Sensoranordnung vorgesehen sein kann.

Gemäß einer weiteren Ausführungsform ist das wärmeisolierende Material ein Kunststoff oder eine Keramik.

Gemäß einer weiteren Ausführungsform ist als das wärmeisolierende Material der Kunststoff PEEK oder die Keramik eine Silikatkeramik oder eine Zirkonoxid (ZrO)-Keramik ist.

Das wärmeisolierende Material kann eine kleinere Wärmeleitfähigkeit aufweisen als der metallische Hohlleiter. Beispielsweise kann der Hohlleiter aus Kupfer eine Leitfähigkeit von 401 W/(m·K) oder aus einem Edelstahl eine Leitfähigkeit von 15 W/(m·K) aufweisen. Der hochtemperaturbeständige thermoplastische Kunststoff Polyetheretherketon (PEEK) als das wärmeisolierende Material weist eine Leitfähigkeit von 0,25 W/(m·K) auf und kann zum Verhindern der Wärmetransport der Sensoranordnung mit einem Hohlleiter aus Kupfer oder dem Edelstahl vorgesehen sein. Auch eine Zirkonoxid (ZrO)-Keramik mit einer Wärmeleitfähigkeit von 2 W/(m·K) kann für den Kupfer- oder Edelstahl-Hohlleiter geeignet sein. Im Gegensatz kann eine Aluminiumoxid (Al2O3)-Keramik mit einer Wärmeleitfähigkeit von 30 W/(m·K) für den Hohlleiter aus Kupfer, nicht für den Hohlleiter aus dem Edelstahl, ein geeignetes Wärmeisolierenden Material sein.

Gemäß einer weiteren Ausführungsform weist das Wärmeisolierelement der Sensoranordnung einen ersten Isolierelementabschnitt, der zum Aufnehmen des ersten Hohlleiterabschnitts eingerichtet ist, und einen zweiten Isolierelementabschnitt, die zum Aufnehmen des zweiten Hohlleiterabschnitts eingerichtet ist, auf. Das Wärmeisolierelement ist dazu eingerichtet, eine Temperatur der Sensoranordnung entlang der Länge des Wärmeisolierelements zwischen dem ersten Isolierelementabschnitt und dem zweiten Isolierelementabschnitt absenken zu lassen.

Der erste Isolierelementabschnitt kann einen ersten Durchlass mit einer ersten Ausnehmung aufweisen, der einen größeren Durchmesser als die Bohrung des Wärmeisolierelements aufweisen kann. Der Durchmesser des ersten Durchlasses kann größer als der Außenumfang des ersten Hohlleiterabschnitts sein, um den ersten Hohlleiterabschnitt beim Verbinden aufzunehmen. Zwischen dem ersten Durchlass des ersten Isolierelementabschnitts und der Innenwandung des Wärmeisolierelements kann eine erste Anschlagfläche vorgesehen sein, an welche der erste Hohlleiterabschnitt anstoßen kann, wobei die erste Anschlagfläche beispielsweise der Stirnfläche des ersten Hohlleiterabschnitts entsprechen kann. Es kann vorgesehen sein, dass die erste Anschlagsfläche senkrecht zu der Innenwandung stehen kann.

Der zweite Isolierelementabschnitt kann einen zweiten Durchlass mit einer zweiten Ausnehmung aufweisen, der einen größeren Durchmesser als die Bohrung des Wärmeisolierelements aufweisen kann. Der Durchmesser des zweiten Durchlasses kann größer als der Außenumfang des zweiten Hohlleiterabschnitts sein, um den zweiten Hohlleiterabschnitt beim Verbinden aufzunehmen. Zwischen dem zweiten Durchlass des zweiten Isolierelementabschnitts und der Innenwandung des Wärmeisolierelements kann eine zweite Anschlagfläche vorgesehen sein, an welche der zweite Hohlleiterabschnitt anstoßen kann, wobei die zweite Anschlagfläche beispielsweise der Stirnfläche des zweiten Hohlleiterabschnitts entsprechen kann. Es kann vorgesehen sein, dass die zweite Anschlagsfläche senkrecht zu der Innenwandung stehen kann.

Der erste Durchlass und der zweite Durchlass können einen gleichen Durchmesser oder unterschiedliche Durchmesser aufweisen, je nachdem, ob der erste Hohlleiterabschnitt und der zweite Hohlleiterabschnitt einen gleichen Außenumfang oder unterschiedliche Außenumfänge aufweisen können.

Die Innenwandung des Wärmeisolierelements kann die Innenwandung entlang des ganzen Wärmeisolierelements sein, d.h. die Innenwandung kann die Innenwand des ersten Wärmeisolierelements, die erste Anschlagfläche, die Wandung der Bohrung, die zweite Anschlagfläche und die Innenwand des zweiten Wärmeisolierelements umfassen. Die Innenwandung des Wärmeisolierelements kann vollständig oder durchgängig metallisiert sein. Alternativ kann die Innenwandung des Wärmeisolierelements teilweise metallisiert sein. In anderen Worten kann beispielsweise nur die Wandung der Bohrung metallisiert sein, so dass die Innenwandung des Wärmeisolierelements mit der Innenwandung des Hohlleiters gemeinsam nach dem Verbinden eine durchgängige oder spaltfreie Innenwand der Sensoranordnung ausbilden kann, um das Messsignal störungsfrei zu übertragen.

Gemäß einer weiteren Ausführungsform ist das Wärmeisolierelement dazu eingerichtet, das Messsignal innerhalb des Wärmeisolierelements mit der Innenwandung zwischen dem ersten Hohlleiterabschnitt und dem zweiten Hohlleiterabschnitt des Hohlleiters zu übertragen.

Damit die Wärmeleitfähigkeit des Wärmeisolierelements auch durch die Metallisierung sehr gering zu halten sein kann, kann die Metallisierung nur im zehntel oder hundertstel Bereich, wie z. B. mit einer Beschichtungsdicke von 0,1 bis 0,001 mm, aufgebracht werden. Beispielsweise kann die Bohrung des Wärmeisolierelements einen Durchmesser von 2,6 mm aufweisen. Um die Innenwandung oder die Bohrung zu metallisieren, kann das Wärmeisolierelement eine Länge von beispielsweise kleiner als 5 mm aufweisen. Durch die Metallisierung oder die Beschichtung der Bohrung in dem Wärmeisolierelement kann es vorteilhaft ermöglichen, ein gutes oder optimales Radarsignal für die Sensoranordnung zu erhalten.

Gemäß einer weiteren Ausführungsform weist das Wärmeisolierelement weiterhin ein Verbindungselement auf, das dazu eingerichtet ist, das Wärmeisolierelement mit dem ersten Hohlleiterabschnitt und/oder dem zweiten Hohlleiterabschnitt zu befestigen.

Gemäß einer weiteren Ausführungsform ist das Verbindungselement eine Federverbindung oder eine Schnappverbindung.

Beispielsweise können mittels des Verbindungselements der Hohlleiter mit den ersten und zweiten Hohlleiterabschnitten und das Wärmeisolierelement durch ein Feder-auf-Block-Verbindungssystem zusammengedrückt werden, so dass kein Spalt zwischen dem Hohlleiter und dem Wärmeisolierelement entstehen kann.

Somit kann das Wärmeisolierelement in dem Hohlleiter integriert sein und mit dem Hohlleiter bzw. den ersten und zweiten Hohlleiterabschnitten eine Hohlleiteranordnung ausbilden, die beispielsweise aus zwei Materialien, nämlich einem Kunststoff oder einer Keramik als einem wärmeisolierenden Material und einem Metall für den Hohlleiter und die Metallisierung der Innenwandung des Wärmeisolierelements, bestehen kann.

Gemäß einer weiteren Ausführungsform entspricht die Innenwandung des Wärmeisolierelements bei dem Verbinden des ersten Hohlleiterabschnitts mit dem ersten Isolierelementabschnitt und/oder dem Verbinden des zweiten Hohlleiterabschnitts mit dem zweiten Isolierelementabschnitt der Innenwandung des Hohlleiters.

Somit kann das Messsignal innerhalb der Sensoranordnung durch die ersten und zweiten Hohlleiterabschnitte des Hohlleiters und das Wärmeisolierelement durchgängig, stufenfrei und störungsfrei geführt oder übertragen werden.

Gemäß einer weiteren Ausführungsform weist die Sensoranordnung weiterhin eine Messelektronik mit einem Radarchip auf, die mit dem zweiten Hohlleiterabschnitt des Hohlleiters verbunden ist und zum Erzeugen eines Messsignals und/oder zum Auswerten eines Messsignals aus der Antenne eingerichtet ist.

Beispielweise kann der Radarchip ein Hochfrequenz (HF)-Radarchip, beispielsweise mit einer Arbeitsfrequenz von 80 GHz oder höher, sein.

Beispielsweise kann der Hohlleiter aus einem Edelstahl eine dünne Wandung aufweisen, um die Wärmeleitfähigkeit zu verringern. Allerdings kann es erforderlich sein, dass die Wandung des Hohlleiters eine Mindestwandung mit einer Mindestdicke sein, so dass der Hohlleiter herstellbar sein kann.

Ohne das Vorsehen eines Wärmeisolators kann der Hohlleiter, der beispielsweise aus einem Metall bestehen kann, eine Mindestlänge aufweisen, um die Temperatur bzw. die Wärme der Sensoranordnung ausgehend von der Antenne oder dem ersten Hohlleiterabschnitt, an dem die Antenne angeordnet sein kann, an dem zweiten Hohlleiterabschnitt soweit absenken zu lassen, so dass die Messelektronik, die an dem zweiten Hohlleiterabschnitt abgewandt von der Antenne angeordnet sein kann, nicht beschädigt werden kann. Handelt es sich beispielsweise um einen Kunststoff- oder Keramik-Hohlleiter, soll der Hohlleiter mit einer Bohrung von 2,6 mm für ein Messsignal mit einer Frequenz von 80 GHz eine Tiefe von größer als 5 mm zu beschichten sein. Die Metallisierung eines solchen Hohlleiters erfordert hohen technischen Aufwand und der Hohlleiter kann beispielsweise dadurch hergestellt werden, dass zwei Hohlleiterhalbschalen jeweils metallisiert und anschließend zusammengebaut werden können, um die Bohrung auszubilden. Es kann für die Sensoranordnung mit diesem Hohlleiter eine hohe technische Herausforderung bestehen, dass der Messstrahl nach dem Zusammenbau der zwei Hohlleiterhalbschale ohne Einfluss durch den Spalt entlang des Hohlleiters von der Messelektronik an die Antenne oder umgekehrt übertragen werden kann.

Im Gegensatz dazu kann die Sensoranordnung mit dem Wärmeisolator oder dem Wärmeisolierelement vorteilhaft die Wärmeleitung bzw. die Wärmeausbreitung von dem ersten Hohlleiterabschnitt über den zweiten Hohlleiterabschnitt an die Messelektronik und/oder den Radarchip zumindest teilweise verhindern oder unterbrochen, um die Messelektronik und/oder den Radarchip vor der Wärme und der hohen Prozesstemperatur zu schützen. Beispielsweise können der HF-Radarchip und die Messelektronik nur mit einer Temperatur bis zum 85°C belastet werden. Erreicht eine Prozesstemperatur eine Hochtemperatur von 130°C oder höher, kann das Vorsehen des Wärmeisolierelements vorteilhaft ermöglichen, dass die Sensoranordnung bei dem Einsatz kompakt gebaut werden kann, so dass die Temperatur der Sensoranordnung mit Hilfe des Wärmeisolierelements von der hohen Prozesstemperatur von 130°C auf eine Temperatur unterhalb 85°C senken kann. In anderen Worten kann die Sensoranordnung mit der Antenne, dem Hohlleiter und dem Wärmeisolierelement eine kurze und kompakte Bauform aufweisen, damit die Wärmeleitung zwischen dem ersten Hohlleiterabschnitt und dem zweiten Hohlleiterabschnitt signifikant unterbrochen oder verhindert werden kann und die Messelektrode und der Radarchip somit vor der hohen Prozesstemperatur geschützt werden können. Die Sensoranordnung kann daher über einen langen Zeitraum in einer Prozessanlage mit der hohen Prozesstemperatur robust und stabil eingesetzt werden.

Falls die Sensoranordnung einen autarken Radarsensor aufweisen kann, kann beispielsweise die autarke Sensoranordnung zur drahtlosen Kommunikation der Messelektronik bzw. des Radarchips mit einer externen Empfangseinheit, einer externen Auswerteeinheit oder einem Cloudsystem, beispielsweise für die Datenübertragung, eingerichtet sein. Im Vergleich zu einer drahtgebundenen Kommunikation, bei der die für die Messung erforderliche Energie stets im Einsatz stehen soll, kann mit der Verfügbarkeit weiterentwickelter, energiesparender drahtlosen Technologien in zunehmendem Umfang batteriebetriebene Sensoren zur Überwachung von Füllstand-, Grenzstand- oder Druckwerten an Bedeutung gewinnen. Besondere Vorteile ergeben sich für Anwendungen im Bereich der Prozessautomatisierung im industriellen oder privaten Umfeld wie z. B. der Logistik.

Unter dem Begriff "Prozessautomatisierung im industriellen oder privaten Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemeint ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Beispielsweise kann durch die fortlaufende, automatisierte Überwachung der Füllstände in mobilen Behältern und die vorzugsweise drahtlose Übertragung der Werte an eine zentrale Auswertestelle im Bereich der Warenlogistik eine standortübergreifende Bestandsverwaltung auf einfache Art und Weise realisiert werden. Unter Verwendung der erfassten Daten können in Abhängigkeit von der jeweiligen Problemstellung signifikante Kostenreduktionen erreicht werden, wenn beispielsweise die Fahrroute für Lieferfahrzeuge zur Versorgung mit Nachschub optimiert werden kann.

Ein nicht erfindungsgemäßer Aspekt betrifft ein Wärmeisolierelement für eine Sensoranordnung mit einer Antenne und einem Hohlleiter, welches einen ersten Isolierelementabschnitt und einen zweiten Isolierelementabschnitt aufweist. Der erste Isolierelementabschnitt ist zum Aufnehmen eines ersten Hohlleiterabschnitts des Hohlleiters eingerichtet. Der zweite Isolierelementabschnitt ist zum Aufnehmen eines zweiten Hohlleiterabschnitts des Hohlleiters eingerichtet. Das Wärmeisolierelement ist dazu eingerichtet, eine Wärmeleitung zwischen dem ersten Hohlleiterabschnitt und dem zweiten Hohlleiterabschnitt zumindest teilweise zu verhindern.

Ein weiterer nicht erfindungsgemäßer Aspekt betrifft die Verwendung eines Wärmeisolierelements zur Wärmeisolation einer Elektronik mit einem Radarchip eines Füllstand-, Grenzstand- und/oder Druckmessgeräts.

Ein weiterer Aspekt der Erfindung betrifft die Verwendung einer Sensoranordnung zur Füllstand- und/oder Grenzstandmessung in einer Prozessanlage.

Im Folgenden werden weitere Ausführungsformen beschrieben. Sind in den folgenden Figuren die gleichen Bezugszeichen angegeben, so bezeichnen diese gleiche oder ähnliche Elemente. Die Darstellungen in den Figuren sind schematisch und nicht maßstäblich.

### Kurze Beschreibung der Figuren

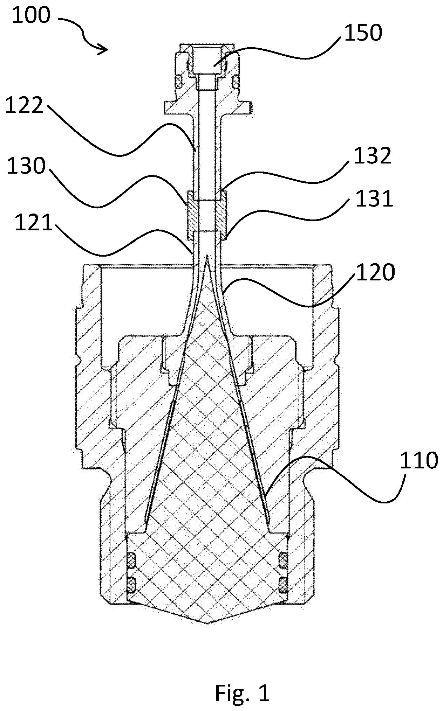

Fig. 1 zeigt eine Sensoranordnung gemäß einer Ausführungsform.

### Detaillierte Beschreibung von Ausführungsformen

Fig. 1 zeigt eine Sensoranordnung 100, die zur Messung eines Füllstands- und/ oder eines Grenzstands eingerichtet ist und eine Antenne 110, einen Hohlleiter 120, ein Wärmeisolierelement 130 und eine Messelektronik 150 mit einem Radarchip aufweist.

Die Antenne 100 kann eine Hornantenne oder eine Parabolantenne sein und kann zum Aussenden und/oder Empfangen eines Messsignals eingerichtet sein.

Der Hohlleiter 120 kann einen ersten Hohlleiterabschnitt 121, der zum Verbinden mit der Antenne 110 eingerichtet sein kann, und einen zweiten Hohlleiterabschnitt 122, der zum Verbinden mit der Messelektronik 150 bzw. einer Hochfrequenzelektronikeinheit eingerichtet sein, aufweisen. Der Hohlleiter 120 kann zum Übertragen des Messsignals, von der Messelektronik 150 in Richtung der Antenne 110 oder umgekehrt, eingerichtet sein.

Beispielsweise kann der Hohlleiter 120 aus einem Metall, beispielsweise aus Kupfer oder einem Edelstahl sein.

Das Wärmeisolierelement 130 ist zwischen dem ersten Hohlleiterabschnitt 121 und dem zweiten Hohlleiterabschnitt 122 angeordnet und kann dazu eingerichtet sein, eine Wärmeleitung zwischen dem ersten Hohlleiterabschnitt 121 und dem zweiten Hohlleiterabschnitt 122 zumindest teilweise zu verhindern.

Das Wärmeisolierelement 130 kann aus einem wärmeisolierenden Material bestehen, welches ein Kunststoff oder eine Keramik sein kann. Beispielsweise kann das wärmeisolierende Material des Wärmeisolierelements 130 ein Kunststoff PEEK oder eine Keramik wie z.B. eine Silikatkeramik oder eine Zirkonoxid (ZrO)-Keramik sein.

Es kann erforderlich sein, dass das wärmeisolierende Material eine kleinere Wärmeleitfähigkeit aufweisen kann als der metallischen Hohlleiter120. Beispielsweise kann der Hohlleiter 120 aus Kupfer eine Leitfähigkeit von 401 W/(m·K) oder aus einem Edelstahl eine Leitfähigkeit von 15 W/(m·K) aufweisen. Der hochtemperaturbeständige thermoplastische Kunststoff PEEK als das wärmeisolierende Material weist eine Leitfähigkeit von 0,25 W/(m·K) auf und kann zum Verhindern der Wärmetransport der Sensoranordnung 100 mit einem Hohlleiter 120 aus Kupfer oder dem Edelstahl vorgesehen sein. Auch eine Zirkonoxid (ZrO)-Keramik mit einer Wärmeleitfähigkeit von 2 W/(m·K) kann für den Kupfer- oder Edelstahl-Hohlleiter geeignet sein. Im Gegensatz kann eine Aluminiumoxid (Al2O3)-Keramik mit einer Wärmeleitfähigkeit von 30 W/(m·K) für den Hohlleiter aus Kupfer, nicht für den Hohlleiter aus dem Edelstahl, ein geeignetes Wärmeisolierenden Material sein.

Das Wärmeisolierelement 130 kann rohrförmig ausgebildet sein. Beispielsweise kann das Wärmeisolierelement 130 eine Ausnehmung oder eine Bohrung aufweisen, um eine runde oder rechteckige Durchführung in dem Wärmeisolierelement 130 auszubilden. Beispielsweise kann die Bohrung für einen HF-Radarchip mit einer Arbeitsfrequenz von 80 GHz einen Durchmesser von 2,6 mm aufweisen.

Darüber hinaus kann das Wärmeisolierelement 130 eine Innenwandung aufweisen, die zumindest teilweise metallisiert sein kann. Alternativ kann das Wärmeisolierelement 130 auch vollständig metallisiert sein. Vorzugsweise kann die Metallisierung nur im zehntel oder hundertstel Bereich, wie z. B. mit einer Beschichtungsdicke von 0,1 bis 0,001 mm, aufgebracht werden, wodurch die Wärmeleitfähigkeit des Wärmeisolierelements 130 nach der Metallisierung auch gering sein kann. Somit kann die Wärmeleitung oder der Wärmetransport in Richtung der Messelektronik 150 effektiv verhindert werden und das Radarsignal gleichzeitig störungsfrei und durchgängig geführt werden kann.

Das Wärmeisolierelement 130 kann einen ersten Isolierelementabschnitt 131 mit einem ersten Durchlass an einem ersten Ende des Wärmeisolierelements 130 und einen zweiten Isolierelementabschnitt 132 mit einem zweiten Durchlass an einem gegenüberliegenden zweiten Ende des Wärmeisolierelements 130 aufweisen, wobei der erste Isolierelementabschnitt 131 zum Aufnehmen des ersten Hohlleiterabschnitts 121 und der zweite Isolierelementabschnitt 132 zum Aufnehmen des zweiten Hohlleiterabschnitts 122 eingerichtet sein kann.

Das Wärmeisolierelement 130 ist dazu eingerichtet, eine Temperatur der Sensoranordnung entlang der Länge des Wärmeisolierelements 130 zwischen dem ersten Isolierelementabschnitt 131 und dem zweiten Isolierelementabschnitt 132 absenken zu lassen. Beispielsweise können der Radarchip, der ein HF-Radarchip sein kann, und die Messelektronik nur mit einer Temperatur bis zum 85°C belastet werden. Erreicht eine Prozesstemperatur eine Hochtemperatur von 130°C oder höher, kann das Vorsehen des Wärmeisolierelements 130 vorteilhaft ermöglichen, dass die Sensoranordnung 100 bei dem Einsatz kompakt gebaut werden kann, so dass die Temperatur der Sensoranordnung 100 in einer kurzen Bauform mit Hilfe des Wärmeisolierelements von der hohen Prozesstemperatur auf eine Temperatur unterhalb 85°C senken kann.

Der erste Durchlass des ersten Isolierelementabschnitts 131 kann einen größeren Durchmesser als die Bohrung des Wärmeisolierelements 130 aufweisen, während der zweite Durchlass des zweiten Isolierelementabschnitts 132 einen größeren Durchmesser als die Bohrung des Wärmeisolierelements 130 aufweisen kann. Zwischen dem ersten Durchlass des ersten Isolierelementabschnitts 131 und der Innenwandung des Wärmeisolierelements 130 kann eine erste Anschlagfläche vorgesehen sein, an welche der erste Hohlleiterabschnitt 121 anstoßen kann, wobei die erste Anschlagfläche beispielsweise der Stirnfläche des ersten Hohlleiterabschnitts 121 entsprechen kann. Die erste Anschlagsfläche kann senkrecht zu der Innenwandung stehen. Zwischen dem zweiten Durchlass des zweiten Isolierelementabschnitts 132 und der Innenwandung des Wärmeisolierelements 130 kann eine zweite Anschlagfläche vorgesehen sein, an welche der zweite Hohlleiterabschnitt 122 anstoßen kann, wobei die zweite Anschlagfläche beispielsweise der Stirnfläche des zweiten Hohlleiterabschnitts 122 entsprechen kann. Die zweite Anschlagsfläche kann senkrecht zu der Innenwandung stehen. Der erste Durchlass und der zweite Durchlass können einen gleichen Durchmesser, wie in Fig. 1 gezeigt, oder unterschiedliche Durchmesser aufweisen, je nachdem, ob der erste Hohlleiterabschnitt 121 und der zweite Hohlleiterabschnitt 122 einen gleichen Außenumfang oder unterschiedliche Außenumfänge aufweisen können.

Das Wärmeisolierelement 130 kann weiterhin ein Verbindungselement aufweisen, welches dazu eingerichtet sein kann, das Wärmeisolierelement 130 mit dem ersten Hohlleiterabschnitt 121 und/oder dem zweiten Hohlleiterabschnitt 122 zu befestigen. Das Verbindungselement kann beispielsweise eine Federverbindung oder eine Schnappverbindung sein.

Beispielsweise können mittels des Verbindungselements der Hohlleiter mit den ersten und zweiten Hohlleiterabschnitten und das Wärmeisolierelement durch ein Feder-auf-Block-Verbindungssystem zusammengedrückt werden, so dass kein Spalt zwischen dem Hohlleiter 120 und dem Wärmeisolierelement 130 entstehen kann.

Des Weiteren kann das Wärmeisolierelement 130 dazu eingerichtet sein, das Messsignal innerhalb des Wärmeisolierelements 130 mit der Innenwandung zwischen dem ersten Hohlleiterabschnitt 121 und dem zweiten Hohlleiterabschnitt 122 des Hohlleiters zu übertragen. Weil die Innenwandung des Wärmeisolierelement 130 metallisiert sein kann, kann das Messsignal bzw. der Messstrahl von der Messelektronik bzw. dem Radarchip der Messelektronik an die Antenne 110 oder umgekehrt über den ersten Hohlleiterabschnitt 121, das Wärmeisolierelement 130 und den zweiten Hohlleiterabschnitt 122 geführt werden.

Die Innenwandung des Wärmeisolierelements 130 kann bei dem Verbinden des ersten Hohlleiterabschnitts 121 mit dem ersten Isolierelementabschnitt und/oder bei dem Verbinden des zweiten Hohlleiterabschnitts 122 mit dem zweiten Isolierelementabschnitt 132 der Innenwandung des Hohlleiters 120 entsprechen. Somit kann der Übergang zwischen der Innenwandung des Wärmeisolierelements 130 und die Innenwandung des Hohlleiters 120 bzw. des ersten Hohlleiterabschnitts 121 und/oder des zweiten Hohlleiterabschnitts spaltfrei ausgebildet sein, so dass das Messsignal oder das Radarsignal ohne Einfluss durchgängig innerhalb der Sensoranordnung 100 übertragen werden kann.

Darüber hinaus kann das Wärmeisolierelement 130 in dem Hohlleiter 120 integriert sein und mit dem Hohlleiter 120 bzw. den ersten und zweiten Hohlleiterabschnitten 121, 122 eine Hohlleiteranordnung ausbilden, die aus zwei Materialien, nämlich einem Kunststoff oder einer Keramik als einem wärmeisolierenden Material und einem Metall für den Hohlleiter 120 und die Metallisierung der Innenwandung des Wärmeisolierelements 130, bestehen kann.

Des Weiteren kann die Antenne 110 mit dem Hohlleiter 120 bzw. dem ersten Hohlleiterabschnitt 121 integral oder integriert ausgebildet sein.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Sensoranordnung (100), eingerichtet zur Messung eines Füllstands und/oder eines Grenzstands, aufweisend:
eine Antenne (110), eingerichtet zum Aussenden und/oder Empfangen eines Messsignals;
einen Hohlleiter (120), der einen ersten Hohlleiterabschnitt (121) zum Verbinden mit der Antenne (110) und einen zweiten Hohlleiterabschnitt (122) aufweist und zum Übertragen des Messsignals eingerichtet ist;
ein Wärmeisolierelement (130), das zwischen dem ersten Hohlleiterabschnitt (121) und dem zweiten Hohlleiterabschnitt (122) angeordnet ist und dazu eingerichtet ist, eine Wärmeleitung zwischen dem ersten Hohlleiterabschnitt (121) und dem zweiten Hohlleiterabschnitt (122) zumindest teilweise zu verhindern;
wobei das Wärmeisolierelement (130) aus einem wärmeisolierenden Material besteht;
**dadurch gekennzeichnet, dass** das Wärmeisolierelement (130) rohrförmig ausgebildet ist,
wobei das Wärmeisolierelement (130) eine Innenwandung aufweist, die zumindest teilweise metallisiert ist;
wobei die Innenwandung des Wärmeisolierelements (130) bei dem Verbinden des ersten Hohlleiterabschnitts (121) mit dem ersten Isolierelementabschnitt (131) und/oder dem Verbinden des zweiten Hohlleiterabschnitts (122) mit dem zweiten Isolierelementabschnitt (132) der Innenwandung des Hohlleiters (120) entspricht.

2. Sensoranordnung (100) gemäß Anspruch 1,
wobei die Antenne (110) eine Hornantenne oder eine Parabolantenne ist.

3. Sensoranordnung (100) gemäß Anspruch 1 oder 2,
wobei das wärmeisolierende Material ein Kunststoff oder eine Keramik ist.

4. Sensoranordnung (100) gemäß Anspruch 3,
wobei der Kunststoff PEEK ist; oder
wobei die Keramik eine Silikatkeramik oder eine Zirkonoxid-Keramik ist.

5. Sensoranordnung (100) gemäß einem der vorhergehenden Ansprüche,
wobei das Wärmeisolierelement (130) einen ersten Isolierelementabschnitt (131), eingerichtet zum Aufnehmen des ersten Hohlleiterabschnitts (121), und einen zweiten Isolierelementabschnitt (132), eingerichtet zum Aufnehmen des zweiten Hohlleiterabschnitts (122), aufweist und dazu eingerichtet ist, eine Temperatur der Sensoranordnung entlang der Länge des Wärmeisolierelements (130) zwischen dem ersten Isolierelementabschnitt (131) und dem zweiten Isolierelementabschnitt (132) absenken zu lassen.

6. Sensoranordnung (100) gemäß Anspruch 4 oder 5,
wobei das Wärmeisolierelement (130) dazu eingerichtet ist, das Messsignal innerhalb des Wärmeisolierelements (130) mit der Innenwandung zwischen dem ersten Hohlleiterabschnitt (121) und dem zweiten Hohlleiterabschnitt (122) des Hohlleiters (120) zu übertragen.

7. Sensoranordnung (100) gemäß einem der vorhergehenden Ansprüche,
wobei das Wärmeisolierelement (130) weiterhin ein Verbindungselement aufweist, das dazu eingerichtet ist, das Wärmeisolierelement (130) mit dem ersten Hohlleiterabschnitt (121) und/oder dem zweiten Hohlleiterabschnitt (122) zu befestigen.

8. Sensoranordnung (100) gemäß Anspruch 7,
wobei das Verbindungselement eine Federverbindung oder eine Schnappverbindung ist.

9. Sensoranordnung (100) gemäß einem der vorhergehenden Ansprüche, weiterhin aufweisend:
eine Messelektronik (150) mit einem Radarchip, die mit dem zweiten Hohlleiterabschnitt (122) des Hohlleiters (120) verbunden ist und zum Erzeugen eines Messsignals und/oder zum Auswerten eines Messsignals aus der Antenne (110) eingerichtet ist.

10. Verwendung einer Sensoranordnung (100) gemäß einem der Ansprüche 1 bis 9 zur Füllstand- und/oder Grenzstandmessung in einer Prozessanlage.

## Claims

1. Sensor assembly (100) configured to measure a fill level and/or a limit level, comprising:
an antenna (110) configured to transmit and/or receive a measurement signal;
a waveguide (120) comprising a first waveguide section (121)for connection to the antenna (110) and a second waveguide section (122), and configured to transmit the measurement signal;
a thermal insulation element (130) arranged between the first waveguide section (121) and the second waveguide section (122) and configured to at least partially prevent heat conduction between the first waveguide section (121) and the second waveguide section (122);
wherein the thermal insulation element (130) consists of a thermally insulating material;
**characterized in that** the thermal insulation element (130) is tubular in shape;
wherein the thermal insulation element (130) comprises an inner wall that is at least partially metallized;
wherein the inner wall of the thermal insulation element (130) corresponds to the inner wall of the waveguide (120) when the first waveguide section (121) is connected to the first insulation element section (131) and/or when the second waveguide section (122) is connected to the second insulation element section (132).

2. Sensor assembly (100) according to claim 1,
wherein the antenna (110) is a horn antenna or a parabolic antenna.

3. Sensor assembly (100) according to claim 1 or 2,
wherein the thermally insulating material is a plastic or a ceramic.

4. Sensor assembly (100) according to claim 3,
wherein the plastic is PEEK; or
wherein the ceramic is a silicate ceramic or a zirconia ceramic.

5. Sensor assembly (100) according to any one of the preceding claims,
wherein the thermal insulation element (130) comprises a first insulation element section (131) configured to receive the first waveguide section (121), and a second insulating element section (132) configured to receive the second waveguide section (122), and is configured to cause a temperature of the sensor assembly to decrease along the length of the thermal insulating element (130) between the first insulating element section (131) and the second insulating element section (132).

6. Sensor assembly (100) according to claim 4 or 5,
wherein the thermal insulation element (130) is configured to transmit the measurement signal within the thermal insulation element (130) via the inner wall between the first waveguide section (121) and the second waveguide section (122) of the waveguide (120).

7. Sensor assembly (100) according to any one of the preceding claims,
wherein the thermal insulation element (130) further comprises a connecting element configured to secure the thermal insulation element (130) to the first waveguide section (121) and/or the second waveguide section (122).

8. Sensor assembly (100) according to claim 7,
wherein the connecting element is a spring connection or a snap-fit connection.

9. Sensor assembly (100) according to one of the preceding claims, further comprising:
measurement electronics (150) with a radar chip, which is connected to the second waveguide section (122) of the waveguide (120) and is configured to generate a measurement signal and/or to evaluate a measurement signal from the antenna (110).

10. Use of a sensor assembly (100) according to any one of claims 1 to 9 for fill level and/or limit level measurement in a process plant.

## Revendications

1. Ensemble capteur (100), configuré pour mesurer un niveau de remplissage et/ou un niveau de seuil, comportant :
une antenne (110) configurée pour émettre et/ou recevoir un signal de mesure ;
un guide d'ondes (120) qui comporte une première partie de guide d'ondes (121) destinée à être reliée à l'antenne (110) et une seconde partie de guide d'ondes (122), et est configuré pour transmettre le signal de mesure ;
un élément d'isolation thermique (130) qui est agencé entre la première partie de guide d'ondes (121) et la seconde partie de guide d'ondes (122) et est configuré pour empêcher au moins partiellement une conduction thermique entre la première partie de guide d'ondes (121) et la seconde partie de guide d'ondes (122) ;
dans lequel l'élément d'isolation thermique (130) est constitué d'un matériau thermiquement isolant ;
**caractérisé en ce que** l'élément d'isolation thermique (130) est réalisé en forme de tube,
dans lequel l'élément d'isolation thermique (130) comporte une paroi intérieure qui est au moins partiellement métallisée ;
dans lequel la paroi intérieure de l'élément d'isolation thermique (130) correspond à la paroi intérieure du guide d'ondes (120) lorsque la première partie de guide d'ondes (121) est reliée à la première partie d'élément d'isolation (131) et/ou lorsque la seconde partie de guide d'ondes (122) est reliée à la seconde partie d'élément d'isolation (132).

2. Ensemble capteur (100) selon la revendication 1,
dans lequel l'antenne (110) est une antenne à cornet ou une antenne parabolique.

3. Ensemble capteur (100) selon la revendication 1 ou 2,
dans lequel le matériau thermiquement isolant est une matière plastique ou une céramique.

4. Ensemble capteur (100) selon la revendication 3,
dans lequel la matière plastique est du PEEK ; ou
dans lequel la céramique est une céramique de silicate ou une céramique d'oxyde de zircone.

5. Ensemble capteur (100) selon l'une des revendications précédentes,
dans lequel l'élément d'isolation thermique (130) comporte une première partie d'élément d'isolation (131), configurée pour recevoir la première partie de guide d'ondes (121), et une seconde partie d'élément d'isolation (132), configurée pour recevoir la seconde partie de guide d'ondes (122), et est configurée pour permettre de réduire une température de l'ensemble capteur sur la longueur de l'élément d'isolation thermique (130) entre la première section d'élément d'isolation (131) et la seconde section d'élément d'isolation (132).

6. Ensemble capteur (100) selon la revendication 4 ou 5,
dans lequel l'élément d'isolation thermique (130) est configuré pour transmettre le signal de mesure à l'intérieur de l'élément d'isolation thermique (130) avec la paroi intérieure entre la première partie de guide d'ondes (121) et la seconde partie de guide d'ondes (122) du guide d'ondes (120).

7. Ensemble capteur (100) selon l'une des revendications précédentes,
dans lequel l'élément d'isolation thermique (130) comporte en outre un élément de liaison qui est configuré pour fixer l'élément d'isolation thermique (130) avec la première partie de guide d'ondes (121) et/ou avec la seconde partie de guide d'ondes (122).

8. Ensemble capteur (100) selon la revendication 7,
dans lequel l'élément de liaison est une liaison à ressort ou une liaison par encliquetage.

9. Ensemble capteur (100) selon l'une des revendications précédentes, comportant en outre:
une électronique de mesure (150) ayant une puce radar qui est reliée à la seconde partie de guide d'ondes (122) du guide d'ondes (120) et est configurée pour générer un signal de mesure et/ou pour évaluer un signal de mesure provenant de l'antenne (110).

10. Utilisation d'un ensemble capteur (100) selon l'une des revendications 1 à 9 pour mesurer un niveau de remplissage et/ou un niveau de seuil dans une installation de processus.
